# EUROPEAN PATENT APPLICATION

(11) **EP 4 786 238 A1**
(43) Date of publication of application: **05.08.2026**
(21) Application number: 26150629.9
(22) Date of filing: 07.01.2026
(51) Int. Cl.: B60K 6/46, B60W 10/06, B60W 10/08, B60W 10/188, B60W 10/26, B60W 20/13, B60W 20/15, B60W 20/19, B60W 20/40, B60W 30/18

(54) **CONTROL DEVICE OF HYBRID VEHICLE**

(30) Priority: 30.01.2025 JP 2025013936
(71) Applicant: Suzuki Motor Corporation, Hamamatsu-shi, Shizuoka 432-8611 (JP)
(72) Inventor: HANADA, Kei, Hamamatsu-shi, 432-8611 (JP)
(74) Representative: Plasseraud IP

(57) **Abstract**

[Object]

It is to provide a control device of a hybrid vehicle capable of avoiding electric power from being consumed for an unnecessary motoring.

[Solution]

There is provided a control unit to: when a negative pressure in a negative pressure chamber of a brake booster decreases, perform a motoring of rotating an engine by a motor to thereby recover a negative pressure in a negative pressure chamber; and start the engine when an engine start condition is satisfied. The control unit is to change the engine start condition (S12, S13), depending on the negative pressure in the negative pressure chamber (S11).

## Description

### [Technical Field]

The present invention relates to a control device of a hybrid vehicle.

### [Background Art]

As a prior art, there is known Patent Literature 1 relating to a control device of a hybrid vehicle, in which:
a motoring of rotating an internal combustion engine by a motor for motoring is to be performed when a negative pressure stored in a brake booster decreases below a lower limit threshold value;
the motoring is to be maintained until the stored negative pressure in the brake booster is recovered up to or above an upper limit threshold value which is higher than the lower limit threshold value, to thereby be completed on a condition that the stored negative pressure is recovered up to or above the upper limit threshold value; and
when a predetermined acceleration request condition, on which a driver intends to accelerate a vehicle, is established, the upper limit threshold value is set as a lower value than when the predetermined acceleration request condition is non-established.

### [Citation List]

### [Patent Literature]

[Patent Literature 1] JP 7139073 B2

### [Summary of Invention]

### [Technical Problem]

However, in such a prior art, an engine start condition and a motoring start condition are independent from each other and hence, the engine may be started immediately after the motoring is performed, causing a problem that electric power may be consumed for such an unnecessary motoring.

The present invention has been made in consideration of the circumstances as mentioned above, and an object thereof is to provide a control device of a hybrid vehicle capable of avoiding electric power from being consumed for an unnecessary motoring.

### [Solution to Problem]

According to an aspect of the present invention, there is provided a control device of a hybrid vehicle, the hybrid vehicle including: an engine; a motor connected to the engine, being configured to rotate together with the engine to thereby generate electric power/to be supplied with electric power to thereby drive the engine with the supplied electric power; a brake device to generate a braking force; and a brake booster to reinforce the braking force using an intake negative pressure in the engine, the control device including: a control unit to, when a negative pressure in a negative pressure chamber of the brake booster decreases, perform a motoring of rotating the engine by the motor to thereby recover the negative pressure in the negative pressure chamber, wherein the control unit is configured to: start the engine when an engine start condition is satisfied; and change the engine start condition, depending on the negative pressure in the negative pressure chamber.

### [Advantageous Effect of Invention]

According to the present invention, it is possible to avoid electric power from being consumed for an unnecessary motoring.

### [Brief Description of Drawings]

FIG. 1 is a diagram of a hybrid vehicle mounted with a control device according to an embodiment of the present invention.
FIG. 2 is a flowchart indicative of procedures of a motoring control process to be performed by the control device according to the embodiment.
FIG. 3 is a flowchart indicative of procedures of an engine start control process to be performed by the control device according to the embodiment.
FIG. 4 is a timing chart to explain an action by the control device according to the embodiment.
FIG. 5 is a conceptual map to be referred to by the control device.

### [Description of Embodiment]

A control device according to an embodiment of the present invention is mounted on a hybrid vehicle, the hybrid vehicle including: an engine; a motor connected to the engine, being configured to rotate together with the engine to thereby generate electric power/to be supplied with electric power to thereby drive the engine with the supplied electric power; a brake device to generate a braking force; and a brake booster to reinforce the braking force using an intake negative pressure in the engine, the control device including: a control unit to, when a negative pressure in a negative pressure chamber of the brake booster decreases, perform a motoring of rotating the engine by the motor to thereby recover the negative pressure in the negative pressure chamber, wherein the control unit is configured to: start the engine when an engine start condition is satisfied; and change the engine start condition, depending on the negative pressure in the negative pressure chamber.

Accordingly, it is possible to avoid electric power from being consumed for an unnecessary motoring.

### [Embodiment(s)]

Hereinafter, referring to FIGS., a hybrid vehicle mounted with a control device according to an embodiment of the present invention will be described.

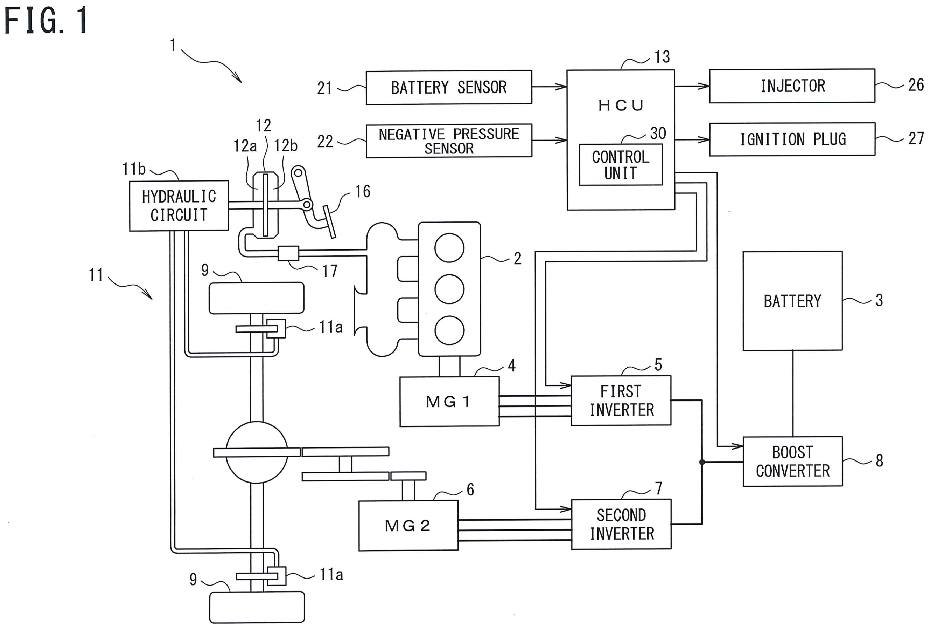

As shown in FIG. 1, a hybrid vehicle 1 includes an internal combustion engine 2 (hereinafter referred to simply as "engine"), a battery 3, a first motor 4 (hereinafter also referred to as "MG1"), a first inverter 5, a second motor 6 (hereinafter also referred to as "MG2"), a second inverter 7, a boost converter 8, driving wheels 9, a brake device 11, a brake booster 12, and a hybrid controller 13 (hereinafter referred to simply as "HCU").

The engine 2 is formed with a plurality of cylinders. The engine 2 is configured to perform, for each of the cylinders, a series of four steps of an intake step, a compression step, an expansion step, and an exhaust step, to thereby generate mechanical power.

The battery 3 is of a secondary battery (namely, rechargeable battery), such as a lithium-ion battery. The battery 3 is configured to store electric power generated by the MG1/MG2, to thereby supply the stored electric power to the MG1 and the MG2 to drive them.

The battery 3 is configured to output a voltage of 100V, for example.

The MG1 is connected to a crankshaft of the engine 2 so as to rotate together therewith. The MG1 is electrically connected to the battery 3 through the first inverter 5 and the boost converter 8. The MG1 has a motor function of rotating with electric power supplied from the battery 3 to thereby rotate the crankshaft of the engine 2, and a generator function of converting mechanical power generated by the engine 2 into electric power.

The MG1 constitutes a motor of the present invention.

The MG2 is connected to the driving wheels 9 via a power transmission member such as a gear mechanism, to thereby rotate together with the driving wheels 9. The MG2 is electrically connected to the battery 3 through the second inverter 7 and the boost converter 8.

The MG2 has a motor function of rotating with electric power supplied from the battery 3 and/or the MG1 to thereby rotate the driving wheels 9, and a generator function of converting a rotation force of the driving wheels 9 into electric power.

The boost converter 8 is provided between the battery 3 and the first and second inverters 5, 7, which is configured to boost voltage of electric power to be supplied from the battery 3 to the first and second inverters 5, 7 and to step down voltage of electric power to be supplied from the first and second inverters 5, 7 to the battery 3.

The brake device 11 is configured to apply wheels, such as the driving wheels 9, with braking force in response to an operation force applied to a brake pedal 16. The brake device 11 includes a brake 11a, and a hydraulic circuit 11b to actuate the brake 11a.

The brake 11a is of a brake disc, for example.

The brake booster 12 is configured to reinforce a force of a driver's operation to the brake pedal 16. The reinforced operation force to the brake pedal 16 by the brake booster 12 is to be further reinforced by the hydraulic circuit 11b to thereby be transmitted to the brake 11a.

The brake booster 12 is formed with a negative pressure chamber 12a to store negative pressure, and an atmospheric pressure chamber 12b on which atmospheric pressure acts. The brake booster 12 is to reinforce the operation force applied to the brake pedal 16, using a differential pressure between pressures in the respective negative and atmospheric pressure chambers 12a, 12b.

The negative pressure chamber 12a communicates with, through a check valve 17, an intake passage of the engine 2. The check valve 17 is configured to prohibit air from flowing from the intake passage of the engine 2 into the negative pressure chamber 12a but allow the air to flow from the negative pressure chamber 12a into the intake passage of the engine 2.

The negative pressure (of which value is negative) in the negative pressure chamber 12a is to decrease in response to the operation to the brake pedal 16 but to be recovered by the intake negative pressure in the engine 2.

Note that in the embodiment, "decrease of negative pressure (low negative-pressure)" means that pressure increases (i.e., an absolute value of negative pressure becomes smaller) and on the other hand, "increase of negative pressure (high negative-pressure)" means that pressure decreases (i.e., an absolute value of negative pressure becomes larger).

The HCU 13 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the HCU 13, in addition to various constants and maps. That is, the CPU executes the program stored in the ROM using the RAM as an operation area, causing the computer unit to function as the HCU 13.

The input port of the HCU 13 is connected with various sensors including a battery sensor 21 to detect battery state, such as discharging/charging current of the battery 3 and voltage of the battery 3 between terminals thereof, and a negative pressure sensor 22 to detect the negative pressure in the negative pressure chamber 12a.

The output port of the HCU 13 is connected with various control-targets including the first inverter 5, the second inverter 7, the boost converter 8, injectors 26 to inject fuel into the engine 2, and ignition plugs 27 to ignite the fuel in respective combustion chambers of the engine 2.

The HCU 13 is configured to control such various control-targets connected to the output port, based on information obtained from the various sensors connected to the input port.

In the embodiment, the HCU 13 is to function as a control unit 30 configured to, when the negative pressure in the negative pressure chamber 12a decreases, perform a motoring of driving the MG1 to rotate the engine 2 to thereby recover the decreased negative pressure in the negative pressure chamber 12a, but start the engine 2 when an engine start condition is satisfied.

Specifically, when the negative pressure in the negative pressure chamber 12a, detected by the negative pressure sensor 22, decreases below a threshold value for starting the motoring (hereinafter referred to simply as "motoring start threshold value"), namely an absolute value of the detected negative pressure is smaller than that of the motoring start threshold value, the HCU 13 is to start performing the motoring and then, terminate the motoring immediately after the detected negative pressure reaches or exceeds a threshold value for terminating the motoring (hereinafter referred to simply as "motoring termination threshold value").

The motoring start threshold value (of which value is negative) is set in advance as a value obtained by adding a certain margin (negative value) to minimum negative pressure in the negative pressure chamber 12a down to which the brake booster 12 can function as such.

The motoring termination threshold value (of which value is negative) is set in advance as a value obtained by subtracting a certain margin (negative value) from maximum negative pressure up to which the negative pressure can act on the negative pressure chamber 12a.

The engine start condition is to be established, when a state of charge of the battery 3 (hereinafter referred to simply as "SOC"), which is to be calculated based on e.g., the detected battery state by the battery sensor 21, decreases below a threshold value for SOC (hereinafter referred to simply as "SOC threshold value") or when a power requested to be outputted from the hybrid vehicle 1 (hereinafter referred to simply as "request output") exceeds a threshold value for request output (hereinafter referred to simply as "output threshold value").

The HCU 13 is to change the engine start condition so as to be more likely to be established, when the negative pressure in the negative pressure chamber 12a decreases to or below a predetermined threshold value for negative pressure (hereinafter referred to simply as "predetermined negative pressure") higher than the motoring start threshold value (i.e., while absolute value of the negative pressure is equal to or smaller than that of the predetermined negative pressure). That is, thereat, the HCU 13 is to relax the engine start condition to thereby render the engine 2 more likely to be started.

The predetermined negative pressure is prescribed as "-50kPa", for example.

Specifically, at changing the engine start condition for allowing the engine 2 to be more likely to be started, the HCU 13 sets the SOC threshold value to be higher, namely selects, as the SOC threshold value, higher one of a first SOC threshold value and a second SOC threshold value. The first SOC threshold value is higher than the second SOC threshold value.

For example, the first SOC threshold value is prescribed as "40%", and the second SOC threshold value is prescribed as "35%".

That is, at relaxing the engine start condition, the HCU 13 selects the first SOC threshold value as the SOC threshold value. On the other hand, while the engine start condition is not changed (namely, at normal time), the HCU 13 selects the second SOC threshold value as the SOC threshold value.

Additionally, at relaxing the engine start condition, the HCU 13 also sets the output threshold value to be lower. Specifically, the HCU 13 selects, as the output threshold value, lower one of a first output threshold value and a second output threshold value. The first output threshold value is lower than the second output threshold value.

For example, the first output threshold value is prescribed as "8kW", and the second output threshold value is prescribed as "10kW".

That is, at relaxing the engine start condition, the HCU 13 selects the first output threshold value as the output threshold value. On the other hand, while the engine start condition is not changed (namely, at normal time), the HCU 13 selects the second output threshold value as the output threshold value.

When the engine start condition is satisfied, the HCU 13 starts the fuel supply by the injectors 26 and the ignition by the ignition plugs 27 while causing the MG1 to initially rotate the crankshaft of the engine 2, to thereby start the engine 2.

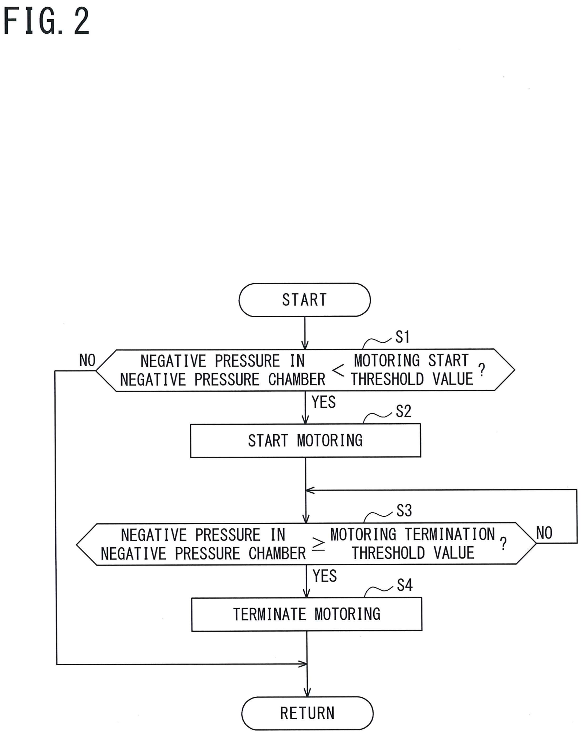

Next, referring to FIG. 2, a motoring control process to be performed by the above-mentioned HCU 13 will be explained. Note that the motoring control process is to be repeated while the HCU 13 is activated.

Firstly, at step S1, the HCU 13 determines whether the negative pressure in the negative pressure chamber 12a currently-detected by the negative pressure sensor 22 is lower than the motoring start threshold value (i.e., whether an absolute value of the currently-detected negative pressure is smaller than that of the motoring start threshold value).

If determines at step S1 that the currently-detected negative pressure is lower than the motoring start threshold value ("YES" at step S1), the HCU 13 proceeds to step S2.

Otherwise ("NO" at step S1), the HCU 13 terminates this motoring control process to thereby repeat it.

At step S2, the HCU 13 starts to perform the motoring. After step S2, the HCU 13 proceeds to step S3.

At step S3, the HCU 13 determines whether or not: the currently-detected negative pressure is the motoring termination threshold value or higher.

If determines at step S3 that the currently-detected negative pressure is the motoring termination threshold value or higher ("YES" at step S3), the HCU 13 proceeds to step S4.

Otherwise ("NO" at step S3), the HCU 13 proceeds to step S3 again.

That is, at step S3, until the currently-detected negative pressure is recovered to thereby reach the motoring termination threshold value, the HCU 13 is placed in a standby state to wait for the negative pressure to reach or exceed the motoring termination threshold value.

At step S4, the HCU 13 terminates the motoring. After step S4, the HCU 13 terminates this motoring control process to thereby repeat it.

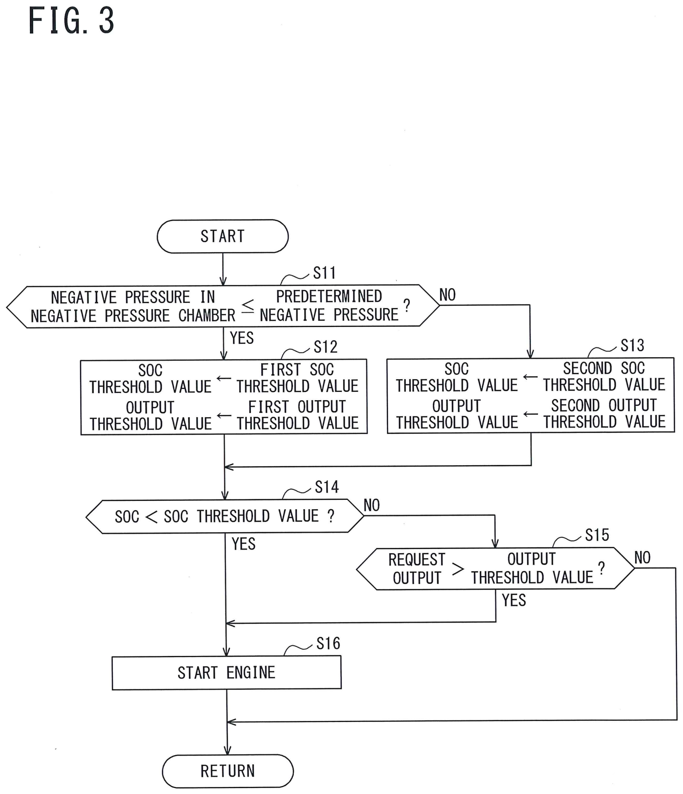

Next, referring to FIG. 3, an engine start control process to be performed by the above-mentioned HCU 13 will be explained. Note that the engine start control process is to be repeated while the HCU 13 is activated.

Firstly, at step S11, the HCU 13 determines whether or not: the currently-detected negative pressure is the predetermined negative pressure or lower (i.e., an absolute value of the currently-detected negative pressure is equal to or smaller than that of the predetermined negative pressure).

If determines at step S11 that the currently-detected negative pressure is the predetermined negative pressure or lower ("YES" at step S11), the HCU 13 proceeds to step S12.

Otherwise ("NO" at step S11), the HCU 13 proceeds to step S13.

At step S12, the HCU 13 selects the first SOC threshold value as the SOC threshold value, and selects the first output threshold value as the output threshold value.

After step S12, the HCU 13 proceeds to step S14.

At step S13, the HCU 13 selects the second SOC threshold value as the SOC threshold value, and selects the second output threshold value as the output threshold value.

After step S13, the HCU 13 proceeds to step S14.

At step S14, the HCU 13 determines whether the SOC currently-acquired from the battery sensor 21 or the like (hereinafter referred to as "current SOC") is lower than the selected SOC threshold value (namely, first SOC threshold value/second SOC threshold value) at the previous step S12/S13.

If determines at step S14 that the current SOC is lower than the selected SOC threshold value ("YES" at step S14), the HCU 13 proceeds to step S16.

Otherwise ("NO" at step S14), the HCU 13 proceeds to step S15.

At step S15, the HCU 13 determines whether the current request output is larger than the selected output threshold value (namely, first output threshold value/second output threshold value) at the previous step S12/S13.

If determines at step S15 that the current request output is larger than the selected output threshold value ("YES" at step S15), the HCU 13 proceeds to step S16.

Otherwise ("NO" at step S15), the HCU 13 terminates this engine start control process to thereby repeat it.

At step S16, the HCU 13 starts to drive the engine 2 (or maintains the driving of the engine 2 in the repeated process).

After step S16, the HCU 13 terminates this engine start control process to thereby repeat it.

Note that after the engine 2 is started to be driven at step S16, the engine driving is preferable to be maintained until the SOC is recovered up to a third SOC threshold value higher than the first SOC threshold value, for example.

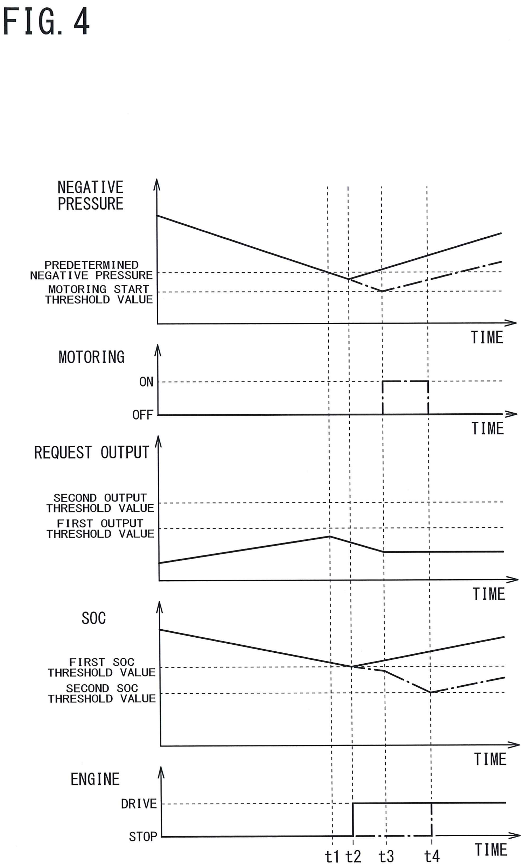

Next, referring to FIG. 4, an action by such an engine start control process will be explained.

FIG. 4 is indicative of an example of time transition for negative pressure, activation state (ON/OFF) of motoring, request output, SOC, and operation state (drive/stop) of engine, in this order from the top.

Note that in graphs of FIG. 4, each solid line indicates the corresponding state in the hybrid vehicle 1 with the control device according to the embodiment, but each dashed line indicates the corresponding state in another hybrid vehicle without the control device (hereinafter referred to simply as "reference example" ).

At time t1, immediately after the negative pressure in the negative pressure chamber 12a decreases to the predetermined negative pressure due to e.g., a continuous operation to the brake pedal 16, the first SOC threshold value is selected and set as the SOC threshold value, and the first output threshold value is selected and set as the output threshold value.

At time t2, immediately after the SOC decreases below the first SOC threshold value with the negative pressure being higher than the motoring start threshold value, the engine 2 is started without the motoring to thereby increase the negative pressure and the SOC.

With respect thereto, in the reference example, at time t3, immediately after the negative pressure in the negative pressure chamber 12a decreases below the motoring start threshold value with the SOC being higher than the selected SOC threshold value (namely, the second SOC threshold value in this case), the MG1 is started to be driven for motoring with the engine 2 being stopped. Due thereto, the negative pressure increases, but the SOC decreases. Thereafter at time t4, the SOC decreases below the selected SOC threshold value, namely second SOC threshold value, starting the engine 2 to thereby increase the SOC.

Accordingly, in the hybrid vehicle 1 with the control device according to the embodiment, the motoring from time t3 to time t4 as being performed in the reference example is to be non-performed.

As such, the control device according to the embodiment is configured to change the engine start condition depending on the negative pressure in the negative pressure chamber 12a, starting the engine at proper timing in consideration of the negative pressure to thereby avoid electric power from being consumed for such an unnecessary motoring.

Specifically, when the negative pressure in the negative pressure chamber 12a decreases to or below the predetermined negative pressure higher than the motoring start threshold value, the control device is to relax the engine start condition to render the engine 2 more likely to be started, starting the engine 2 at proper timing prior to the motoring to thereby avoid the motoring from being unnecessarily performed.

At relaxing the engine start condition, the control device raises the SOC threshold value (i.e., sets the SOC threshold value as larger one), thereby allowing the engine 2 to be started even with the SOC being relatively-high. That is, while the SOC decreases due to power consumption of the battery 3 or the like, the engine 2 is to be started at earlier timing to increase the SOC.

Additionally, at relaxing the engine start condition, the control device lowers the output threshold value (i.e., sets the output threshold value as smaller one), thereby allowing the engine 2 to be started even with the request output being relatively-low. That is, while an accelerator pedal is operated by the driver, the engine 2 is to be started at earlier timing in expectation of decrease of the SOC.

Note that in the embodiment, the engine start condition is that the SOC decreases below the selected SOC threshold value, or that the request output exceeds the selected output threshold value.

Alternatively, the engine start condition may include combination of the SOC and the request output.

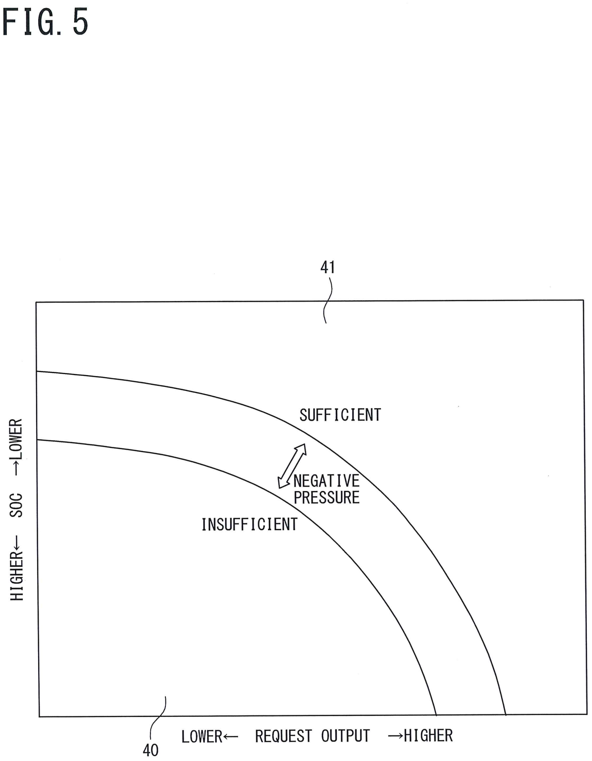

For example, as shown in FIG. 5, there may be stored in the ROM of the HCU 13 a start condition map where an area 40 in which the engine start condition is established and an area 41 in which the engine start condition is non-established are each associated with the SOC and the request output. Then, the HCU 13 may determine whether the engine start condition is established, using the start condition map. For example, the HCU 13 is to determine that the engine start condition is established, when a plot for the current SOC and request output is in the area 41.

In such a start condition map, as the request output is lower, the engine start condition is to be established at lower SOC. In other words, the SOC threshold value is larger as the request output is higher.

Additionally, as shown in FIG. 5, in the start condition map, the area 40 in which the engine start condition is established and the area 41 in which the engine start condition is non-established may be in contact with each other without providing an area not belonging to any area between the area 40 in which the engine start condition is established and the area 41 in which the engine start condition is non-established.

Although the embodiment(s) of the present invention has been disclosed, it is obvious that those skilled in the art can make changes without departing from the scope of the present invention. It is intended that all such modifications and equivalents are encompassed by the claims.

### [Reference Signs List]

1: hybrid vehicle
2: engine
3: battery
4: first motor (motor)
11: brake device
12: brake booster
12a: negative pressure chamber
30: control unit

## Claims

1. A control device of a hybrid vehicle (1),
the hybrid vehicle including:
an engine (2);
a motor (4) connected to the engine, being configured to rotate together with the engine to thereby generate electric power/to be supplied with electric power to thereby drive the engine with the supplied electric power;
a brake device (11) to generate a braking force; and
a brake booster (12) to reinforce the braking force using an intake negative pressure in the engine,
the control device comprising:
a control unit (30) to, when a negative pressure in a negative pressure chamber (12a) of the brake booster decreases, perform a motoring of rotating the engine by the motor to thereby recover the negative pressure in the negative pressure chamber, wherein
the control unit is configured to:
start the engine when an engine start condition is satisfied; and
change the engine start condition, depending on the negative pressure in the negative pressure chamber.

2. The control device as claimed in claim 1, wherein
the control unit is to:
perform the motoring when the negative pressure in the negative pressure chamber decreases below a motoring start threshold value; and
relax the engine start condition so as to render the engine more likely to be started, when the negative pressure in the negative pressure chamber decreases to or below a predetermined negative pressure value higher than the motoring start threshold value.

3. The control device as claimed in claim 2, wherein
the hybrid vehicle includes a battery (3) to store the generated electric power by the motor,
the engine start condition is that a state of charge (SOC) of the battery decreases below a SOC threshold value, and
at relaxing the engine start condition, the control unit raises the SOC threshold value.

4. The control device as claimed in claim 2, wherein
the engine start condition is that a request output to the hybrid vehicle exceeds an output threshold value, and
at relaxing the engine start condition, the control unit lowers the output threshold value.
